# EUROPÄISCHE PATENTSCHRIFT

(11) **EP 2 656 320 B1**
(45) Veröffentlichungstag und Bekanntmachung des Hinweises auf die Patenterteilung: **14.11.2018**
(21) Anmeldenummer: 11801658.3
(22) Anmeldetag: 06.12.2011
(51) Int. Cl.: G07C 9/00, H01Q 1/32, H01Q 7/00, G06K 19/077, H01Q 5/35, H01Q 5/40

(54) **KOMPAKTER, EINE NFC-KOMMUNIKATIONSMÖGLICHKEIT AUFWEISENDER ID-GEBER EINES KRAFTFAHRZEUG-ZUGANGSSYSTEMS**
COMPACT ID TRANSMITTER COMPRISING AN NFC COMMUNICATIONS OPTION FOR A MOTOR VEHICLE ACCESS SYSTEM
DÉTECTEUR D'IDENTITÉ COMPACT, COMPRENANT UNE POSSIBILITÉ DE COMMUNICATION NFC, D'UN SYSTÈME D'ACCÈS À UN VÉHICULE AUTOMOBILE

(30) Priorität: 20.12.2010 DE 102010061351
(43) Veröffentlichungstag der Anmeldung: 30.10.2013
(73) Patentinhaber: Huf Hülsbeck & Fürst GmbH & Co. KG, 42551 Velbert (DE)
(72) Erfinder: ZILLER, Boris, 40885 Ratingen (DE); BROZIO, Dieter, 45238 Essen (DE)
(74) Vertreter: Zenz Patentanwälte Partnerschaft mbB
(86) Internationale Anmeldenummer: PCT/EP2011/071956
(87) Internationale Veröffentlichungsnummer: WO 2012/084504

(56) Entgegenhaltungen:
- EP-A1- 1 376 762
- EP-A1- 1 748 515
- WO-A1-2009/147225
- WO-A2-00/44066
- US-A1- 2005 237 220
- Erik Rolf ET AL: "Near Field Communication (NFC) for Mobile Phones", , 31. August 2006 (2006-08-31), Seiten 74-86, XP55022395, Gefunden im Internet: URL:http://www.es.lth.se/teorel/Publicatio ns/TEAT-5000-series/TEAT-5082.pdf [gefunden am 2012-03-20]

## Beschreibung

Die Erfindung bezieht sich auf einen ID-Geber für ein Kraftfahrzeug-Zugangssystem, der ein Kunststoff-Gehäuse und eine von dem Gehäuse umschlossene, mit Bauelementen bestückte und Leitbahnen aufweisende Leiterplatine aufweist, wobei die Bauelemente unter anderem eine Spannungsversorgungszelle mit einer zugehörigen Halterung, eine LF-3D-Spulenanordnung und HF-Sende-und-Empfangsbauelemente zur Kommunikation mit kraftfahrzeugseitigen Sende- und Empfangseinrichtungen und wenigstens ein Controller-Bauelement umfassen.

Bei einem bekannten ID-Geber der eingangs genannten Art wird die im Kunststoff-Gehäuse angeordnete Leiterplatine ("Leiterplatte") beidseitig mit Bauelementen bestückt. Eine mit den HF-Sende-und-Empfangsbauelementen gekoppelte HF-Antenne ist beispielsweise als Leitbahn auf der Leiterplatine ausgeführt, wobei diese die Antenne bildende Leitbahn üblicherweise in der Nähe des Randes der Leiterplatine in einem nicht mit Bauelementen bestückten Leiterplatinenbereich angeordnet ist. Die LF-3D-Spulenanordnung ist beispielsweise als kompaktes Bauelement mit drei in den drei Raumrichtungen orientierten Empfangsspulen ausgeführt, wobei im Inneren einer parallel zur Leiterplatinenoberfläche liegenden Z-Spule zwei um 90° versetzte Spulen (X- und Y-Spule) mit zur Leiterplatine senkrechten Spulenwindungen angeordnet sind.

Aus WO 2009/147225 A1 ist ein mobiler Identifikationsgeber eines Sicherheitssystems bekannt, bei dem eine Elektronikeinheit mit einer Sende- und Empfangseinheit, eine Rechnereinheit in Form eines FPGA oder eines Mikrocontrollers mit einem Datenspeicher, ein Energiespeicher und ein zusätzliches Kommunikationsmittel für eine Kommunikation mit einem externen Datengerät bis zu einer Reichweite von bis zu 10 cm in einem Gehäuse untergebracht sind. Bei dem externen Datengerät handelt es sich beispielsweise um einen RFID-Chip, so dass zwischen dem ID-Geber und dem RFID-Chip eine Datenübertragung und zusätzlich auch eine Übertragung von Betriebsenergie stattfinden kann, wenn beide voneinander weniger als 10 cm entfernt sind.

Aus der EP 1 748 515 A1 sowie aus der Druckschrift von Erik Rolf und Viktor Nilsson, "Near Field Communication (NFC) for Mobile Phones", Master of Science Thesis, Department of Electroscience, Lund University, August 2006, ist es bekannt, Mobiltelefone mit einer NFC-Kommunikationsmöglichkeit, insbesondere zur Kommunikation mit Bezahlgeräten, auszurüsten, wobei ein NFC-Modul in dem Mobiltelefon angeordnet und mit einer NFC-Antenne verbunden wird, wobei die NFC-Antenne beispielsweise auf einer flexiblen Leiterplatte in Form einer Antennenspule ausgeführt ist, wobei die Antennenspule eine Größe aufweist, die in etwa der Umrahmung der Tastatur des Mobiltelefons oder eines Displays entspricht.

Ausgehend von dem bekannten ID-Geber besteht die der Erfindung zugrundeliegende Aufgabe darin, einerseits einen kompakten ID-Geber mit einer Leiterplatine minimaler Größe zu schaffen und diesen ID-Geber andererseits mit einer NFC-Kommunikationsmöglichkeit auszurüsten.

Diese Aufgabe wird erfindungsgemäß durch einen ID-Geber mit den Merkmalen des Anspruchs 1 gelöst. Der erfindungsgemäße ID-Geber für ein Kraftfahrzeug-Zugangssystem weist ein Kunststoff-Gehäuse und eine vom dem Gehäuse umschlossene, mit Bauelementen bestückte und Leitbahnen aufweisende Leiterplatine auf, wobei die Bauelemente unter anderem eine Spannungsversorgungszelle (z. B. eine Batterie) mit einer zugehörigen Halterung, eine LF-3D-Spulenanordnung und HF-Sende-und-Empfangsbauelemente zur Kommunikation mit kraftfahrzeugseitigen Sende- und Empfangseinrichtungen, ein NFC-Modul und wenigstens ein Controller-Bauelement umfassen. Ferner weist der ID-Geber eine neben der Leiterplatine angeordnete, mit der Leiterplatine verbundene Antennenbaueinheit in Form einer Leiterzüge tragenden Trägerfolie auf, wobei die Leiterzüge eine NFC-Antennenspule bilden, die über die Leitbahnen der Leiterplatine mit dem NFC-Modul gekoppelt ist. Die Trägerfolie ist im Wesentlichen in einer Ebene parallel zu der Leiterplatine angeordnet und steht allseitig über den Rand der Leiterplatine über, wobei die die NFC-Antennenspule bildenden Leiterzüge überwiegend in dem über den Rand der Leiterplatine überstehenden Randflächenbereich der Trägerfolie angeordnet sind.

Die erfindungsgemäße Gestaltung des ID-Gebers gestattet einerseits - durch entsprechende Anordnung der Bauelemente - eine Leiterplatine minimaler Größe und andererseits eine möglichst geringe negative Beeinflussung der Leistungsfähigkeit der NFC-Kommunikation über die NFC-Antennenspule durch die dicht mit Bauelementen bestückte und mit Leitbahnen versehene und somit abschirmend wirkende Leiterplatine. Durch die Verlagerung der NFC-Antennenspule in ein separates und von der Leiterplatine beabstandetes Bauteil, nämlich in eine mit der Leiterplatine verbundene Antennenbaueinheit in Form einer Leiterzüge tragenden Trägerfolie, und durch die Positionierung der die NFC-Antennenspule bildenden Leiterzüge im Wesentlichen außerhalb des Randes der Leiterplatine wird eine gute NFC-Kommunikationsreichweite zu beiden Seiten der Leiterplatine hin ermöglicht, da die NFC-Antennenspule nur allenfalls geringfügig durch die mit Bauelementen und Leiterzügen dicht bestückte Leiterplatine abgeschirmt wird. Eine dichtestmögliche Anordnung der Bauelemente auf der Leiterplatine bewirkt zudem eine minimale Größe der Leiterplatine und entsprechend auch eine minimale Größe der Trägerfolie. Die Trägerfolie ist "im Wesentlichen" in einer Ebene parallel zu der Leiterplatine angeordnet, das heißt, sie kann auch (z. B. montagebedingt) geringfügig (in einem spitzen Winkel) geneigt oder auch geringfügig gekrümmt sein. Wesentlich ist hierbei, dass die Trägerfolie und die Leiterplatine flächig nebeneinander innerhalb eines flachen Kunststoff-Gehäuses angeordnet sind. Die Dicke des Kunststoff-Gehäuses wird somit im Wesentlichen durch die Bauhöhe der beidseitig bestückten Leiterplatine bestimmt; die Trägerfolie selbst ist von vernachlässigbarer Dicke. Die seitlichen Abmessungen des Kunststoff-Gehäuses werden im Wesentlichen von der Größe der Leiterplatine bzw. der Größe der die Leiterplatine am Rand überragenden Trägerfolie bestimmt. Die Trägerfolie steht allseitig über den Rand der Leiterplatine derart über, dass mehrere Windungen einer NFC-Antennenspule vollständig innerhalb dieses überstehenden Bereichs der Trägerfolie angeordnet werden können. Die NFC-Antennenspule weist üblicherweise wenige Antennenwindungen, beispielsweise vier Windungen, auf. Diese die NFC-Antennenspule bildenden Leiterzüge sind "überwiegend" in dem überstehenden Randflächenbereich angeordnet, das heißt, der überwiegende Anteil (bei vier Windungen sind es beispielsweise mindestens drei Windungen) ist in diesem Randflächenbereich angeordnet.

Bei einer bevorzugten Ausführungsform des erfindungsgemäßen ID-Gebers sind die Bauelemente mit einer größeren Bauhöhe, einschließlich der Spannungsversorgungszelle mit zugehöriger Halterung, der LF-3D-Spulenanordnung und dem NFC-Modul, auf einer Seite der Leiterplatine nebeneinander angeordnet und ist die Antennenbaueinheit auf der anderen Seite angeordnet. Die Bauelemente mit einer geringeren Bauhöhe, beispielsweise oberflächenmontierte Chips für aktive Bauelemente (Controller oder Transceiver) oder passive Bauelemente (Widerstände, Kondensatoren) können auf derjenigen Seite der Leiterplatine angeordnet sein, auf der auch die Antennenbaueinheit angeordnet ist. Unter den Bauelementen mit einer "größeren" Bauhöhe sollen hier diejenigen Bauelemente verstanden werden, die sich nicht als flache, oberflächenmontierte Chips aufbringen lassen. Beispielsweise weist die Spannungsversorgungszelle (oder "Batterie") mit zugehöriger Halterung üblicherweise eine Höhe von mindestens 2 mm auf. Die LF-3D-Spulenanordnung enthält drei in den drei Raumrichtungen orientierte Spulenpakete, wobei die Höhe dieses Bauelements von den Spulenpaketen bestimmt wird, die in einer parallel zur Leiterplatinenoberfläche angeordneten Achse orientiert sind. Um eine ausreichende Querschnittsfläche innerhalb der Windungen zu erzielen, muss das LF-3D-Spulenanordnungsbauelement eine Mindestbauhöhe von wenigen Millimetern aufweisen. Schließlich hat auch das NFC-Modul üblicherweise eine Bauhöhe von wenigen Millimeter. Vorzugsweise umfasst es eine Chipkartenaufnahme für eine entnehmbare NFC-Chipkarte, die beispielsweise das Format einer Micro-SD-Karte hat. Die NFC-Chipkartenaufnahme muss, um eine ausreichende mechanische Stabilität zu gewährleisten, die Dicke der darin einlegbaren NFC-Chipkarten übersteigen.

Eine bevorzugte Weiterbildung der zuletzt genannten Ausführungsform ist dadurch gekennzeichnet, dass die LF-3D-Spulenanordnung und das NFC-Modul jeweils eine im Wesentlichen rechteckige Grundfläche aufweisen und dass die LF-3D-Spulenanordnung, das NFC-Modul und die Spannungsversorgungszelle mit zugehöriger Halterung auf der einen Seite der Leiterplatine in einer Richtung hintereinander ohne Abstand oder mit geringem Abstand angeordnet sind und die Fläche der Leiterplatine im Wesentlichen der Summe der von diesen Bauelementen belegten Flächen entspricht. Die drei genannten Bauelemente größerer Bauhöhe werden in einer Längsrichtung der Leiterplatine hintereinander angeordnet, wobei die rechteckige Fläche der Leiterplatine im Wesentlichen der Summe von drei rechteckigen Flächen entspricht, die von den jeweiligen Bauelementen belegt werden. Die Bauelemente werden ohne Abstand oder allenfalls mit einem geringen, technologisch bedingten Abstand hintereinander angeordnet. Der geringe, technologisch bedingte Abstand ergibt sich aus Abmessungstoleranzen. Vorzugsweise wird eine Spannungsversorgungszelle eingesetzt, die eine Kreisfläche von etwa 20 mm Durchmesser belegt und ist die Leiterplatine etwa 20 mm breit und zwischen 40 und 48 mm, vorzugsweise etwa 44 mm, lang.

Die Trägerfolie der Antennenbaueinheit kann relativ starr sein, ist aber vorzugsweise ein wenig flexibel, um den Einbau zu erleichtern und technologische Toleranzen aufnehmen zu können. Die Flexibilität der Trägerfolie sollte allerdings nicht so groß sein, dass bei der Montage ein Umknicken oder Falten der NFC-Antennenspule auftritt.

Bei einer bevorzugten Weiterbildung des erfindungsgemäßen ID-Gebers umfassen die Leiterzüge der Antennenbaueinheit einen über Leitbahnen der Leiterplatine mit den HF-Sende-und-Empfangsbauelementen gekoppelten Leiterzug einer HF-Antenne. Die Verlagerung der HF-Antenne aus der Leiterplatine heraus in einen Leiterzug der Trägerfolie der Antennenbaueinheit als externem Bauelement verbessert die Sende- und Empfangseigenschaften der HF-Antenne, da sie eine Verringerung der Störeinflüsse und der Abschirmung durch die dicht bestückte Leiterplatine ermöglicht. Vorzugsweise ist der Leiterzug der HF-Antenne ebenfalls in dem überstehenden Randflächenbereich der Trägerfolie angeordnet.

Bei einer bevorzugten Weiterbildung ist der Leiterzug der HF-Antenne im Innenbereich der Trägerfolie innerhalb der Leiterzüge der NFC-Antennenspule angeordnet. Beispielsweise erstreckt sich der Leiterzug der HF-Antenne stückweise parallel zur innersten Windung der NFC-Antennenspule.

Bei einer alternativen Ausführungsform sind die HF-Antenne und die NFC-Antennenspule aus einem einzigen spiralförmig ausgebildeten Leiterzug gebildet, wobei der Leiterzug zwei Endanschlüsse und einen an der innersten Windung des Leiterzugs angeordneten Abgriff aufweist, so dass der Leiterzugabschnitt zwischen dem Abgriff und dem inneren Endanschluss die HF-Antenne und der verbleibende Abschnitt die NFC-Antennenspule bildet. Die Endanschlüsse der Leiterzüge sowie der Abgriff sind direkt mit einer Leitbahn auf der Leiterplatine verbunden.

Vorteilhafte und/oder bevorzugte Weiterbildungen der Erfindung sind in den Unteransprüchen gekennzeichnet.

Nachfolgend wird die Erfindung anhand von in den Zeichnungen dargestellten bevorzugten Ausführungsformen näher erläutert. In den Zeichnungen zeigen:
Figur 1 eine schematische Längsschnittdarstellung des erfindungsgemäßen ID-Gebers;
Figuren 2A und 2B schematische Darstellungen der beiden Oberflächen der Leiterplatine des ID-Gebers mit den darauf montierten Bauelementen;
Figur 3 eine schematische Darstellung der Antennenbaueinheit, die parallel zu der in den Figuren 2A und 2B dargestellten Leiterplatine angeordnet wird; und
Figuren 4A und 4B zwei alternative Ausführungsformen der Antennenbaueinheit für einen erfindungsgemäßen ID-Geber mit einem gegenüber Figur 3 abweichenden Längen-Breiten-Verhältnis der Leiterplatine.

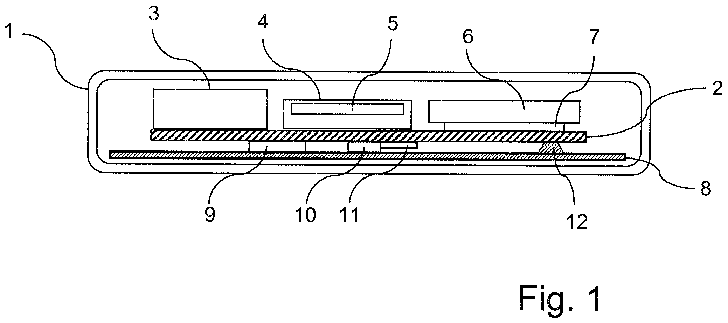

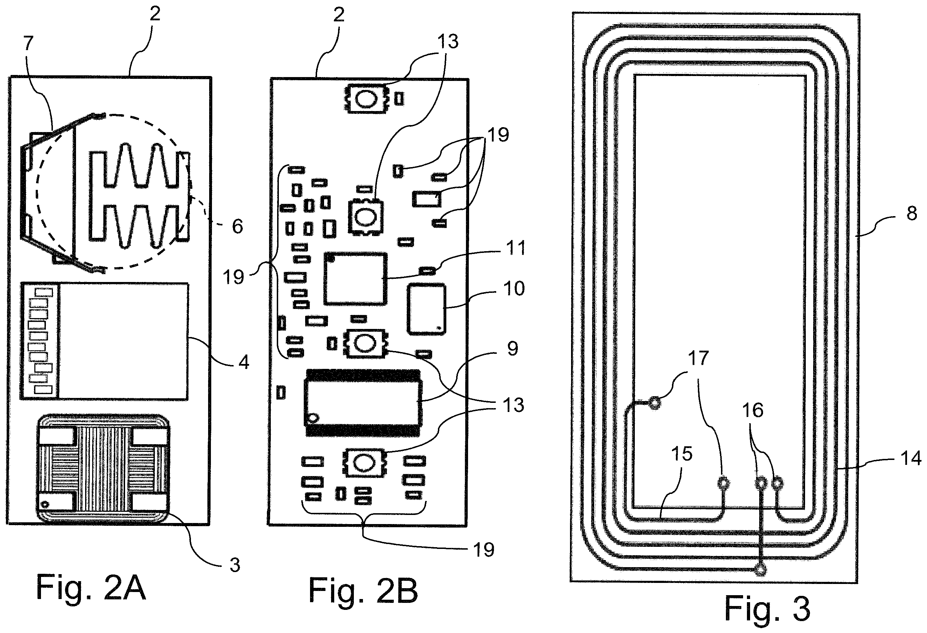

Figur 1 zeigt eine schematische Darstellung eines Längsschnitts durch einen erfindungsgemäßen ID-Geber. In einem Kunststoff-Gehäuse 1 ist eine Leiterplatine 2 (auch Leiterplatte genannt) angeordnet. Die Leiterplatte 2 ist beispielsweise von rechteckiger Form, wobei Figur 1 eine Schnittansicht entlang der längeren Abmessung zeigt. Das Gehäuse 1 besteht beispielsweise aus zwei miteinander verschweißten Schalen, einer Unterschale und einer Oberschale. Das Gehäuse enthält üblicherweise im Inneren Vorsprünge und Ausnehmungen zum formschlüssigen Fixieren der eingelegten Leiterplatine 2. Die Leiterplatine 2 enthält (in Figur 1 nicht gezeigte) Leitbahnen und ist beispielsweise als Zwei-Ebenen-Leiterplatte ausgeführt, wobei Leitbahnen auf der Unterseite und der Oberseite der Leiterplatine 2 ausgebildet sind. Auf der Oberseite der Leiterplatine (in der in Figur 1 gezeigten Orientierung) sind mehrere Bauelemente montiert, so eine LF-3D-Spulenanordnung 3, eine NFC-Chipkartenaufnahme 4 zur Aufnahme einer NFC-Chipkarte 5 und eine Halterung 7 für eine Spannungsversorgungszelle 6 (oder Batterie). Die LF-3D-Spulenanordnung 3 umfasst drei in einem Kunststoffgehäuse eingebrachte Spulen, die in drei zueinander senkrechten Raumrichtungen orientiert sind, wobei die zur Montagefläche, das heißt Leiterplattenoberfläche, senkrechte Raumrichtung als Z-Richtung bezeichnet wird. Wie in Figur 2A, die eine Draufsicht auf die bestückte Leiterplatine 2 zeigt, besser zu erkennen ist, liegen die Windungen einer als Z-Spule bezeichneten Spule parallel zur Leiterplatinenoberfläche und sind am Außenrand des Bauelements 3 angeordnet. Im Inneren dieser liegenden, äußeren Z-Spule sind zwei um 90° versetzte Spulen mit zur Leiterplatine 2 senkrechten Spulenwindungen angeordnet, die als X-Spule und Y-Spule bezeichnet werden. Wie in Figur 2A angedeutet, ist eine der beiden Spulen wiederum im Inneren der anderen Spule angeordnet. Die sechs Anschlüsse der drei Spulen sind mit Kontakten der Leitbahnen der Leiterplatine 2 verbunden. Die LF-3D-Spulenanordnung 3 dient zum Empfang von Aufwecksignalen im LF-Frequenzbereich, beispielsweise bei einer Frequenz von 125 kHz. Die Wicklungsanschlüsse der LF-3D-Spulenanordnung 3 sind über Leitbahnen mit Eingangsanschlüssen einer LF-Empfangsschaltung gekoppelt, die als integrierte Schaltung ausgeführt und ebenfalls auf der Leiterplatine 2 montiert ist.

Auf der Oberseite der Leiterplatine 2 ist außerdem eine Halterung 7 für eine Spannungsversorgungszelle 6 montiert. Als Spannungsversorgungszelle 6 wird beispielsweise eine 3V-Batterie vom Typ CR2032 verwendet. Die auf der Leiterplatinenoberfläche montierte Halterung 7 bildet zugleich eine Kontaktierung der Batterie.

Der erfindungsgemäße ID-Geber ist außerdem mit einer NFC-Kommunikationsmöglichkeit ausgerüstet (NFC = "Near Field Communication"). Zu diesem Zweck ist auf der Oberseite der Leiterplatine 2 eine NFC-Chipkartenaufnahme 4 montiert. Die Chipkartenaufnahme 4 ermöglicht das Einlegen und Wieder-Entnehmen einer NFC-Chipkarte, die auch als "NFC Secure Element" bezeichnet wird. Diese NFC-Chipkarte hat beispielsweise das Format einer Micro-SD-Karte. Die NFC-Chipkarte enthält Sende- und Empfangsschaltungen zur Hochfrequenzkommunikation, beispielsweise bei einer Trägerfrequenz von 13,56 MHz. Außerdem enthält die NFC-Chipkarte Schaltungen zum Verschlüsseln und Entschlüsseln der übertragenen Signale und ferner Controller- und Schnittstellenschaltungen. Beispielsweise enthält die NFC-Chipkarte in der Nähe einer Schmalseite angeordnete Kontakte für eine Spannungsversorgung (Versorgungsspannung und Masse) und zur Datenübertragung (Datensignale und Takt) sowie zur Ankopplung einer Antennenanordnung. Obwohl die NFC-Chipkarte regelmäßig selbst mit einer Antenne ausgestattet ist, dient die Ankopplung einer externen NFC-Antennenspule zur Erhöhung der Kommunikationsreichweite. Eine bevorzugte Ausführungsform der NFC-Chipkarte enthält außerdem eine Schnittstelle für einen USB-Bus, vorzugsweise an der den oben genannten Kontakten gegenüberliegenden Schmalseite der Chipkarte. Die NFC-Chipkarte ist vorzugsweise entnehmbar, so dass das Gehäuse 1 des ID-Gebers vorzugsweise mit einem Deckel oder Verschluss versehen ist, der das Öffnen und Verschließen eines Einschubkanals der NFC-Chipkartenaufnahme 4 zum Einlegen und Entnehmen der NFC-Chipkarte 5 ermöglicht.

Die üblicherweise wenige Millimeter hohen Bauelemente 3, 4 und 6 sind unmittelbar benachbart zueinander und in Längsrichtung der Leiterplatine 2 hintereinander angeordnet. Wie in Figur 2A, die die Draufsicht auf die Leiterplatine 2 zeigt, zu erkennen ist, entspricht die Fläche der Leiterplatine 2 im Wesentlichen der Summe derjenigen Flächen, die die LF-3D-Spulenanordnung 3, die NFC-Chipkartenaufnahme 4 und die Batterie 6 mit zugehöriger Halterung 7 einnehmen.

Wie Figur 1 in Verbindung mit Figur 2B, die die Rückseite der Leiterplatine 2 schematisch darstellt, zu entnehmen ist, sind die übrigen Bauelemente, mit denen die Leiterplatine 2 bestückt ist, vorzugsweise auf der Rückseite der Leiterplatine 2 angeordnet. Diese Bauelemente umfassen zumindest einen Controller 9, einen Schwingquarz 10 und einen Transceiver 11. Der Transceiver 11 dient zur Kommunikation mit einer kraftfahrzeugseitigen Sende- und Empfangseinrichtung im HF-Frequenzbereich, beispielsweise bei 315 MHz oder 433 MHz. Auf der Rückseite der Leiterplatine 2 sind ferner vier Tastschalter 13 angeordnet, die über zugehörige Tasten in Ausnehmungen des Gehäuses 2 durch einen Benutzer betätigt werden können. Die Taster 13 dienen zum Auslösen vorgegebener Funktionen des ID-Gebers, beispielsweise zum Auslösen eines Entriegelns oder Verriegelns der Kraftfahrzeugtüren. Darüber hinaus ist die Rückseite der Leiterplatine 2 mit diversen passiven und aktiven Bauelementen 19 bestückt.

Benachbart zur Rückseite der Leiterplatine 2 und im Wesentlichen parallel zu dieser ist eine Antennenbaueinheit in Form einer Leiterzüge tragenden Trägerfolie 8 angeordnet. Diese Trägerfolie 8 mit Leiterzügen ist in Figur 3 schematisch dargestellt. Die Leiterzüge umfassen eine NFC-Antennenspule 14 mit beispielsweise vier Windungen, wobei die Endanschlüsse 16 der NFC-Antennenspule 14 mit Leitbahnen der Leiterplatine 2 verbunden sind. Die Leitbahnen der Leiterplatine koppeln die NFC-Antennenspule mit entsprechenden Anschlüssen der NFC-Chipkartenaufnahme 4. Figur 1 zeigt einen die Anschlüsse 16 enthaltenden Abschnitt 12 der Trägerfolie 8, der einer Befestigung der Antennenbaueinheit auf der Rückseite der Leiterplatine 2 dient. Wie Figur 3 zu entnehmen ist, befindet sich ferner ein Leiterzug 15 mit Endanschlüssen 17 auf der Trägerfolie 8, der als HF-Antenne zur Kommunikation mit kraftfahrzeugseitigen Sende- und Empfangsschaltungen dient. Die Anschlüsse 17 der HF-Antenne 15 sind ebenfalls mit zugehörigen Kontakten an Leitbahnen der Leiterplatine 2 verbunden. Die Trägerfolie 8 ist vorzugsweise eine flexible Folie, die aber ausreichend steif ist, um eine Formstabilität der Windungen der NFC-Antennenspule zu gewährleisten. Die auf der Rückseite der Leiterplatine 2 befestigte Trägerfolie 8 ist etwas größer, das heißt breiter und länger, als die Leiterplatine 2, so dass ein über den Rand der Leiterplatine 2 überstehender Randbereich der Trägerfolie gebildet wird, wenn die Trägerfolie 8 in einer zentrierten Weise auf der Rückseite der Leiterplatine 2 montiert ist. Die Antennen-Leiterzüge 14 und 15 sind dabei so auf der Trägerfolie 8 angeordnet, dass sie im Wesentlichen vollständig in dem überstehenden Randbereich angeordnet sind. Dadurch wird gewährleistet, dass die mit Bauelementen und Leitbahnen dicht bestückte Leiterplatine 2 nicht die Antennen-Leiterzüge 14 und 15 derart abschirmt, dass die Kommunikation beeinträchtigt wird.

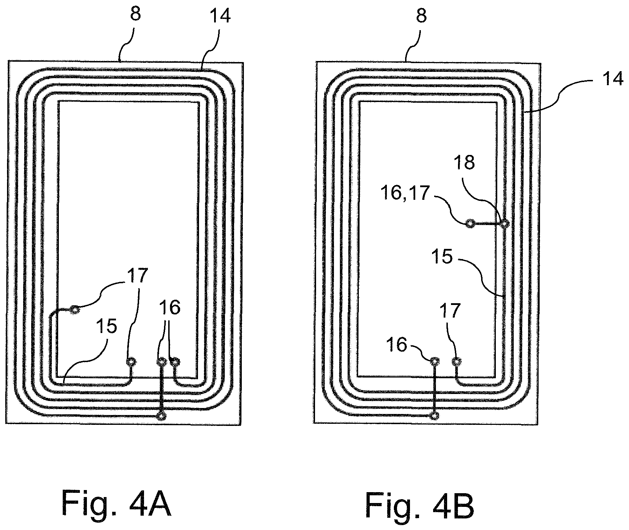

Die Figuren 4A und 4B zeigen alternative Ausführungsformen der Trägerfolie 8 der Antennenbaueinheit mit den aufgebrachten Leiterzügen 14 und 15. Die in den Figuren 4A und 4B dargestellten Folien unterscheiden sich durch das Längen-Breiten-Verhältnis von der in Figur 3 gezeigten Folie 8 und sind dementsprechend für zugehörige Leiterplatinen 2 mit entsprechendem Längen-Breiten-Verhältnis vorgesehen. Bei den in Figur 3 und Figur 4A dargestellten Ausführungsbeispielen der Trägerfolie 8 sind voneinander getrennte Leiterzüge für die NFC-Antennenspule (Leiterzug 14) und für die HF-Antenne (Leiterzug 15) vorgesehen. Die NFC-Antennenspule 14 wird über die Anschlüsse 16 mit der Leiterplatine 2 verbunden, während die HF-Antenne über die Kontakte 17 mit der Leiterplatine 2 verbunden wird. Bei einer alternativen Ausführungsform kann die HF-Antenne auch lediglich mit einem einzigen Kontakt mit der Leiterplatine 2 gekoppelt sein. Bei der in Figur 4B dargestellten Ausführungsform werden die HF-Antenne und die NFC-Antennenspule aus einem einzigen spiralförmig ausgebildeten Leiterzug gebildet. Der Leiterzug 14, 15 weist einen Abgriff 18 auf. Zwischen dem Abgriff und dem inneren Endanschluss der Leiterzug-Spirale ist die HF-Antenne 15 ausgebildet, während der Rest des Leiterzugs die NFC-Antennenspule bildet.

Bei einer bevorzugten Ausführungsform hat die Leiterplatine 2 beispielsweise eine Länge von 44 mm und eine Breite von 20 mm, so dass die Breite der Leiterplatine 2 etwa dem Durchmesser einer Batterie vom Typ CR2032 entspricht. Die LF-3D-Spulenanordnung weist beispielsweise Abmessungen von 11 mm x 11 mm oder 15 mm x 15 mm auf. Der überlappende Bereich der Trägerfolie 8 hat beispielsweise eine Breite zwischen 2 und 5 mm.

Die Aufnahme für die Batterie 6 kann bei einer Ausführungsform so gestaltet sein, dass ein Auswechseln der Batterie möglich ist. Bei einer anderen Ausführungsform kann es vorgesehen sein, dass nach dem vollständigen Entladen der Batterie der ID-Geber weggeworfen und durch einen neuen ersetzt wird. Bei einer weiteren Ausführungsform kann es vorgesehen sein, dass der ID-Geber eine Schaltungsanordung zum Aufladen der Batterie 6 enthält, wobei die zum Aufladen zu übertragende Energie von der LF-3D-Spulenanordnung aufgenommen wird.

## Patentansprüche

1. ID-Geber für ein Kraftfahrzeug-Zugangssystem, aufweisend:
ein Kunststoff-Gehäuse (1),
eine von dem Gehäuse (1) umschlossene, mit Bauelementen (3 - 7, 10, 11, 13, 19) bestückte und Leitbahnen aufweisende Leiterplatine (2), wobei die Bauelemente unter anderem eine Spannungsversorgungszelle (6) mit einer zugehörigen Halterung (7), eine LF-3D-Spulenanordnung (3) und HF-Sende-und-Empfangsbauelemente (10, 11) zur Kommunikation mit kraftfahrzeugseitigen Sende- und Empfangseinrichtungen, ein NFC-Modul (4) und wenigstens ein Controller-Bauelement (9) umfassen,
eine neben der Leiterplatine (2) angeordnete, mit der Leiterplatine (2) verbundene Antennenbaueinheit in Form einer Leiterzüge tragenden Trägerfolie (8), wobei die Leiterzüge eine NFC-Antennenspule (14) bilden, die über die Leitbahnen der Leiterplatine (2) mit dem NFC-Modul (4) gekoppelt ist,
wobei die Trägerfolie (8) im Wesentlichen in einer Ebene parallel zu der Leiterplatine (2) angeordnet ist und allseitig über den Rand der Leiterplatine (2) übersteht, wobei die die NFC-Antennenspule (14) bildenden Leiterzüge überwiegend in dem über den Rand der Leiterplatine (2) überstehenden Randflächenbereich der Trägerfolie (8) angeordnet sind.

2. ID-Geber nach Anspruch 1, **dadurch gekennzeichnet, dass** die Bauelemente mit einer größeren Bauhöhe, einschließlich der Spannungsversorgungszelle (6) mit zugehöriger Halterung (7), der LF-3D-Spulenanordnung (3) und das NFC-Modul (4), auf einer Seite der Leiterplatine (2) nebeneinander angeordnet sind und die Antennenbaueinheit auf der anderen Seite angeordnet ist.

3. ID-Geber nach Anspruch 2, **dadurch gekennzeichnet, dass** die LF-3D-Spulenanordnung (3) und das NFC-Modul (4) jeweils eine im Wesentlichen rechteckige Grundfläche aufweisen und dass die LF-3D-Spulenanordnung (3), das NFC-Modul (4) und die Spannungsversorgungszelle (6) mit zugehöriger Halterung (7) auf der einen Seite der Leiterplatine (2) in einer Richtung hintereinander ohne Abstand oder mit geringem Abstand angeordnet sind und die Fläche der Leiterplatine (2) im Wesentlichen der Summe der von diesen Bauelementen (3,4,7) belegten Flächen entspricht.

4. ID-Geber nach Anspruch 3, **dadurch gekennzeichnet, dass** die Spannungsversorgungszelle (6) eine Kreisfläche von etwa 20 mm Durchmesser belegt und die Leiterplatine (2) etwa 20 mm breit und zwischen 40 mm und 48 mm, vorzugsweise etwa 44 mm, lang ist.

5. ID-Geber nach einem der Ansprüche 1 - 4, **dadurch gekennzeichnet, dass** die Trägerfolie (8) flexibel ist.

6. ID-Geber nach einem der Ansprüche 1 - 5, **dadurch gekennzeichnet, dass** die Leiterzüge der Antennenbaueinheit einen über Leitbahnen der Leiterplatine (2) mit den HF-Sende-und-Empfangsbauelementen (11) gekoppelten Leiterzug (15) einer HF-Antenne umfassen.

7. ID-Geber nach Anspruch 6, **dadurch gekennzeichnet, dass** der Leiterzug (15) der HF-Antenne ebenfalls in dem überstehenden Randflächenbereich der Trägerfolie (8) angeordnet ist.

8. ID-Geber nach Anspruch 7, **dadurch gekennzeichnet, dass** der Leiterzug (15) der HF-Antenne im Innenbereich der Trägerfolie (8) innerhalb der Leiterzüge der NFC-Antennenspule (14) angeordnet ist.

9. ID-Geber nach einem der Ansprüche 6 - 8, **dadurch gekennzeichnet, dass** die HF-Antenne und NFC-Antennenspule aus einem einzigen spiralförmig ausgebildeten Leiterzug (Fig. 4B; 14, 15) gebildet sind, wobei der Leiterzug zwei Endanschlüsse und einen an der innersten Windung des Leiterzugs angeordneten Abgriff (18) aufweist, so dass der Leiterzug-Abschnitt (15) zwischen dem Abgriff (18) und dem inneren Endanschluss (17) die HF-Antenne und der verbleibende Abschnitt (14) die NFC-Antennenspule bildet.

10. ID-Geber nach einem der Ansprüche 1 - 9, **dadurch gekennzeichnet, dass** das NFC-Modul eine NFC-Chipkartenaufnahme (4) für eine NFC-Chipkarte (5) umfasst.

## Claims

1. ID transmitter for a motor vehicle access system, having
a plastic housing (1),
a printed circuit board (2), which is enclosed by the housing (1) and is populated with components (3-7, 10, 11, 13, 19) and comprises conductors, wherein the components comprise inter alia a voltage supply cell (6) with an associated holder (7), an LF-3D coil arrangement (3) and HF transceiver components (10, 11) for communicating with vehicle-side transceiver devices, an NFC module (4), and at least one controller component (9),
an antenna sub-assembly, which is arranged next to the printed circuit board (2) and connected to the printed circuit board (2) and which is present in the form of a carrier film (8) carrying conductor tracks, wherein the conductor tracks form an NFC antenna coil (14), which is coupled to the NFC module (4) via the conductors of the printed circuit board (2),
wherein the carrier film (8) is arranged substantially in a plane parallel to the printed circuit board (2) and protrudes over the edge of the printed circuit board (2) on all sides, wherein the conductor tracks forming the NFC antenna coil (14) are arranged primarily in the edge surface region of the carrier film (8) protruding over the edge of the printed circuit board (2).

2. ID transmitter according to Claim 1,
**characterized in that** the components with larger height, including the voltage supply cell (6) with associated holder (7), the LF-3D coil arrangement (3) and the NFC module (4), are arranged next to one another on one side of the printed circuit board (2) and the antenna sub-assembly is arranged on the other side.

3. ID transmitter according to Claim 2,
**characterized in that** the LF-3D coil arrangement (3) and the NFC module (4) each have a substantially rectangular footprint and that the LF-3D coil arrangement (3), the NFC module (4) and the voltage supply cell (6) with associated holder (7) are arranged on the same side of the printed circuit board (2) one behind another with no spacing or with only a small space between them, and the surface area of the printed circuit board (2) substantially corresponds to the sum of the surface areas occupied by the said components (3, 4, 7).

4. ID transmitter according to Claim 3,
**characterized in that** the voltage supply cell (6) occupies a circular area of approximately 20 mm in diameter and the printed circuit board (2) is approximately 20 mm wide and between 40 mm and 48 mm, preferably approximately 44 mm, long.

5. ID transmitter according any one of Claims 1 - 4,
**characterized in that** the carrier film (8) is flexible.

6. ID transmitter according any one of Claims 1 - 5,
**characterized in that** the conductor tracks of the antenna sub-assembly comprise one conductor track (15) of an HF antenna, which is coupled to the HF transceiver components (11) via conductors of the printed circuit board (2).

7. ID transmitter according Claim 6,
**characterized in that** the conductor track (15) of the HF antenna is also arranged in the protruding edge surface region of the carrier film (8).

8. ID transmitter according to Claim 7,
**characterized in that** the conductor track (15) of the HF antenna is arranged in the inner region of the carrier film (8) inside the conductor tracks of the NFC antenna coil (14).

9. ID transmitter according any one of Claims 6 - 8,
**characterized in that** the HF antenna and NFC antenna coil are formed from a single spiral-shaped conductor track (Fig. 4B; 14, 15), wherein the conductor track has two end connections and a tap (18) arranged on the innermost winding of the conductor track, so that the conductor track segment (15) between the tap (18) and the inner end connection (17) forms the HF antenna and the remaining segment (14) forms the NFC antenna coil.

10. ID transmitter according any one of Claims 1 - 9,
**characterized in that** the NFC module comprises a NFC chip-card holder (4) for an NFC chip-card (5).

## Revendications

1. Détecteur d'identité pour système d'accès à un véhicule automobile, présentant :
un boîtier en plastique (1),
une platine conductrice (2) entourée par le boîtier (1), équipée d'éléments structurels (3-7,10, 11, 13, 19) et présentant des bandes conductrices, les éléments structurels comprenant entre autres une cellule d'alimentation en tension (6) dotée d'un support correspondant (7), un système de bobines (( LF-3D (3) et des éléments structurels d'émission et de réception HF (10,11) pour la communication avec des dispositifs d'émission et de réception situés au niveau du véhicule automobile, un module NFC (4) et au moins un élément structurel de commande (9),
une unité de construction d'antenne disposée près de la platine conductrice (2) et raccordée à la platine conductrice (2) sous la forme d'un film support (8) supportant des lignes conductrices, les lignes conductrices constituant une bobine d'antenne NFC (14) qui est couplée par les bandes conductrices de la platine conductrice (2) au module NFC (4),
le film support (8) étant disposé substantiellement dans un plan parallèle à la platine conductrice (2) et
dépassant de tous côtés du bord de la platine conductrice (2), les lignes conductrices constituant la bobine d'antenne NFC (14) étant disposées majoritairement dans la zone de surface périphérique dépassant du bord de la platine conductrice (2) du film support (8).

2. Détecteur d'identité selon la revendication 1, **caractérisé en ce que** les éléments structurels ayant une hauteur de construction supérieure, y compris la cellule d'alimentation en tension (6) dotée d'un support correspondant (7), le dispositif de bobines LF-3D (3) et le module NFC (4), sont disposés les uns à côté des autres sur une face de la platine conductrice (2) et que l'unité de construction d'antenne est disposée sur l'autre face.

3. Détecteur d'identité selon la revendication 2, **caractérisé en ce que** le dispositif de bobines LF-3D (3) et le module NFC (4) présentent respectivement une surface de base sensiblement rectangulaire et que le dispositif de bobines LF-3D (3), le module NFC (4) et la cellule d'alimentation en tension (6) dotée d'un support correspondant (7), sont disposés sur une face de la platine conductrice (2) orientés les uns derrière les autres sans espacement ou avec un faible espacement et que la surface de la platine conductrice (2) équivaut sensiblement à la somme des surfaces occupées par ces éléments de construction (3, 4, 7).

4. Détecteur d'identité selon la revendication 3, **caractérisé en ce que** la cellule d'alimentation en tension (6) occupe une surface circulaire d'environ 20 mm de diamètre et que la platine conductrice (2) mesure environ 20 mm de large et de 40 mm à 48 mm, de préférence environ 44 mm, de long.

5. Détecteur d'identité selon une des revendications 1 à 4, **caractérisé en ce que** le film support (8) est souple.

6. Détecteur d'identité selon une des revendications 1 à 5, **caractérisé en ce que** les lignes conductrices de l'unité de construction d'antenne comprennent une ligne conductrice (15) couplée par des bandes conductrices de la platine conductrice (2) aux éléments de construction d'émission et de réception HF (11) d'une antenne HF.

7. Détecteur d'identité selon la revendication 6, **caractérisé en ce que** la ligne conductrice (15) de l'antenne HF est également disposée dans la zone de surface périphérique proéminente du film support (8).

8. Détecteur d'identité selon la revendication 7, **caractérisé en ce que** la ligne conductrice (15) de l'antenne HF est disposée dans la partie intérieure du film support (8) dans les lignes conductrices de la bobine d'antenne NFC (14).

9. Détecteur d'identité selon une des revendications 6 à 8, **caractérisé en ce que** l'antenne HF et la bobine d'antenne NFC sont composées d'une seule ligne conductrice réalisée en forme de spirale (fig. 4B ; 14,15), la ligne conductrice présentant deux raccordements terminaux et une prise de prélèvement (18) disposée sur la spire située le plus à l'intérieur de la ligne conductrice, de sorte que la section de ligne conductrice (15) située entre la prise de prélèvement (18) et le raccordement terminal interne (17) constitue l'antenne HF et la section restante (14) la bobine d'antenne NFC.

10. Détecteur d'identité selon une des revendications 1 à 9, **caractérisé en ce que** le module NFC comprend un support de carte à puce NFC (4) pour une carte à puce NFC (5).
